# EUROPEAN PATENT APPLICATION

(11) **EP 4 342 341 A1**
(43) Date of publication of application: **27.03.2024**
(21) Application number: 23176284.0
(22) Date of filing: 31.05.2023
(51) Int. Cl.: A47J 31/18, A47J 31/40

(54) **A COFFEE MAKER**

(30) Priority: 20.09.2022 TR 202214440
(71) Applicant: Arçelik Anonim Sirketi, 34445 Istanbul (TR)
(72) Inventor: BERKAN, Cevdet Mumtaz, 34445 Istanbul (TR); EDIS, Kutay, 34445 Istanbul (TR); KAYISDAG, Varol, 34445 Istanbul (TR); GOZEL, Suheyla, 34445 Istanbul (TR); ARIS, Muharrem, 34445 Istanbul (TR)

(57) **Abstract**

The present invention relates to a coffee maker (1) comprising at least one brewing pot (2) wherein water, coffee and similar materials are put and which is placed into the brewing chamber; at least one heater which is disposed on the base of the brewing chamber and which heats the brewing pot (2); a control unit which enables the heater to be turned on and off; a sugar receptacle (6) which receives sugar; a dosing receptacle (5) which is disposed under the sugar receptacle (6); a motor (9); a carrier (3) which is in the form of a spiral shaft with one end attached to the motor (9) and which is positioned in the dosing receptacle (5) in an inclined manner; and a carrier housing (4) which receives the carrier (3). Thus, by using the carrier (3), the desired amount of sugar is dosed evenly, and the process of adding sugar is automated while preparing coffee.

## Description

The present invention relates to a coffee maker which comprises a sugar dosing mechanism and which is used especially for preparing Turkish coffee.

In the traditional brewing method of Turkish coffee, the mixture of coffee and water is brewed in the coffee pot until boiling temperature and the brewing process is ended when the rising foam reaches an ideal height. Sugar is also added as per user preference.

In coffee makers, especially in Turkish coffee makers, sugar and coffee are stored in receptacles accessible to the user. The brewing process is performed in a compartment such as coffee pot, container, brewing pot, etc. In these embodiments, coffee and sugar must be automatically transferred to the brewing chamber or pot. Various problems may occur during this transfer. One of these problems is the positioning of the coffee and sugar dosing receptacle on the brewing pot or container due to the desire to benefit from gravity. In this case, the steam generated during the brewing process reaches the coffee and sugar in the dosing receptacles and causes the same to come into contact with moisture. This causes the coffee to go stale and the sugar to solidify. Solidification of sugar makes it difficult to transfer sugar and causes hygiene problems. Moreover, the dosing of the desired amount of sugar is prevented.

In the state of the art United States Patent Application No. US2017258262, a sugar dosing mechanism for a coffee maker is disclosed.

In the state of the art Turkish Patent Application No. TR201301618, a sugar dosing mechanism is disclosed, comprising a sugar receptacle and a motor.

In the state of the art European Patent Application No. EP 1254621, a sugar dosing mechanism is disclosed, comprising a spiral sugar receptacle and a motor.

In the state of the United Sates Patent No. US5330078, a coffee maker is disclosed, comprising a spiral mechanism for dosing sugar and similar materials.

The aim of the present invention is the realization of a coffee maker which comprises a sugar dosing mechanism and which is used especially for preparing Turkish coffee.

The coffee maker realized in order to attain the aim of the present invention, explicated in the first claim and the respective claims thereof, comprises at least one brewing pot wherein water, coffee and similar materials are put and which is placed into the brewing chamber; at least one heater which is disposed on the base of the brewing chamber and which heats the brewing pot; a control unit which enables the heater to be turned on and off; a sugar receptacle which receives sugar; a dosing receptacle which is disposed under the sugar receptacle; a motor; a carrier which is in the form of a spiral shaft with one end attached to the motor and which is positioned in the dosing receptacle in an inclined manner; and a carrier housing which receives the carrier. Thus, by using the carrier, the desired amount of sugar is dosed evenly, and the process of adding sugar is automated while preparing coffee.

In an embodiment of the present invention, the coffee maker comprises a first orifice which is arranged at the part of the dosing receptacle aligned with the brewing pot. The first orifice is the orifice through which sugar is poured into the brewing pot.

In another embodiment of the present invention, the coffee maker comprises a second orifice between the sugar receptacle and the dosing receptacle. The second orifice enables sugar to pass from the sugar receptacle to the dosing receptacle.

In another embodiment of the present invention, the carrier is inclined from the second orifice to the first orifice from bottom to top. Thus, in cases where the motor is not operational, in other words the carrier stops, sugar from the sugar receptacle is prevented from directly reaching the brewing pot when the coffee maker vibrates or transported by the user or there are involuntary movements, and is ensured to accumulate at the bottom of the carrier housing wherein the carrier is disposed.

In another embodiment of the present invention, the carrier is manufactured wholly or partially from a soft material. In the preferred embodiment of the present invention, the carrier is manufactured from silicone. Thus, sugar is prevented from getting stuck between the carrier and the carrier housing. In an alternative embodiment of this embodiment of the present invention, the coffee maker comprises at least one brush between the carrier and the carrier housing. Since sugar does not get stuck, it becomes possible to use a motor with lower torque, which in turn decreases costs.

In an embodiment of the present invention, the coffee maker comprises a lid which covers the first orifice and prevents the sugar passing through the second orifice from directly passing into the brewing pot through the first orifice. Thus, sugar is prevented from directly reaching the brewing pot while the sugar receptacle is filled with sugar.

In another embodiment of the present invention, the second orifice is inclined towards the brewing pot. Thus, sugar is enabled to be transferred in the desired direction.

In another embodiment of the present invention, the motor is positioned at the front side of the coffee maker.

A coffee maker realized in order to attain the aim of the present invention is illustrated in the attached figures, where:
Figure 1 - is the perspective view of a coffee maker.
Figure 2 - is the perspective view of a carrier and a carrier housing.

The elements illustrated in the figures are numbered as follows:
- 1.: Coffee maker
- 2.: Brewing pot
- 3.: Carrier
- 4.: Carrier housing
- 5.: Dosing receptacle
- 6.: Sugar receptacle
- 7.: First orifice
- 8.: Second orifice
- 9.: Motor

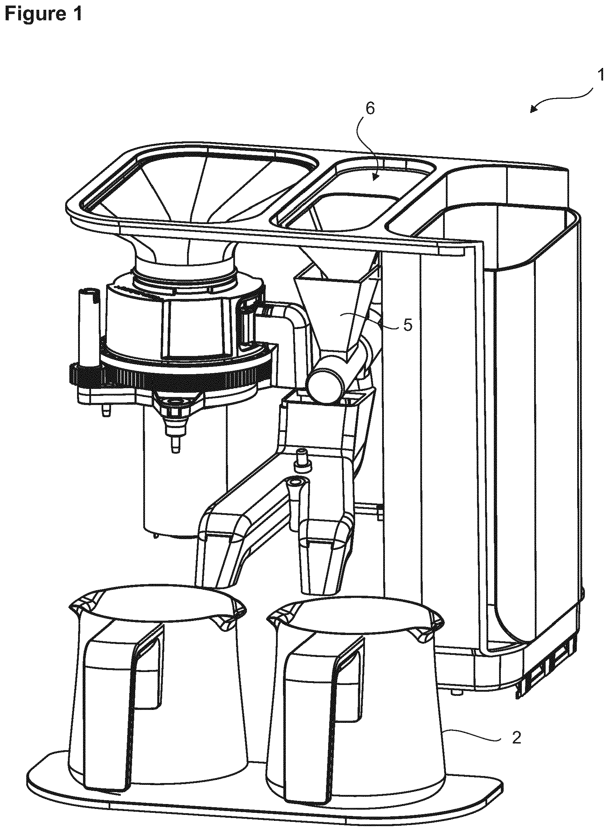

The coffee maker (1) comprises at least one brewing pot (2) wherein water, coffee and similar materials are put and which is placed into the brewing chamber; at least one heater which is disposed on the base of the brewing chamber and which heats the brewing pot (2); a control unit which enables the heater to be turned on and off; a sugar receptacle (6) which receives sugar; a dosing receptacle (5) which is disposed under the sugar receptacle (6); a motor (9); a carrier (3) which is in the form of a spiral shaft with one end attached to the motor (9) and which is positioned in the dosing receptacle (5) in an inclined manner; and a carrier housing (4) which receives the carrier (3). Thus, by using the carrier (3), the desired amount of sugar is dosed evenly, and the process of adding sugar is automated while preparing coffee (Figure 1).

In an embodiment of the present invention, the coffee maker (1) comprises a first orifice (7) which is arranged at the part of the dosing receptacle (5) aligned with the brewing pot (2). The first orifice (1) is the orifice through which sugar is poured into the brewing pot (2).

In another embodiment of the present invention, the coffee maker (1) comprises a second orifice (8) between the sugar receptacle (6) and the dosing receptacle (5). The second orifice (8) enables sugar to pass from the sugar receptacle (6) to the dosing receptacle (5).

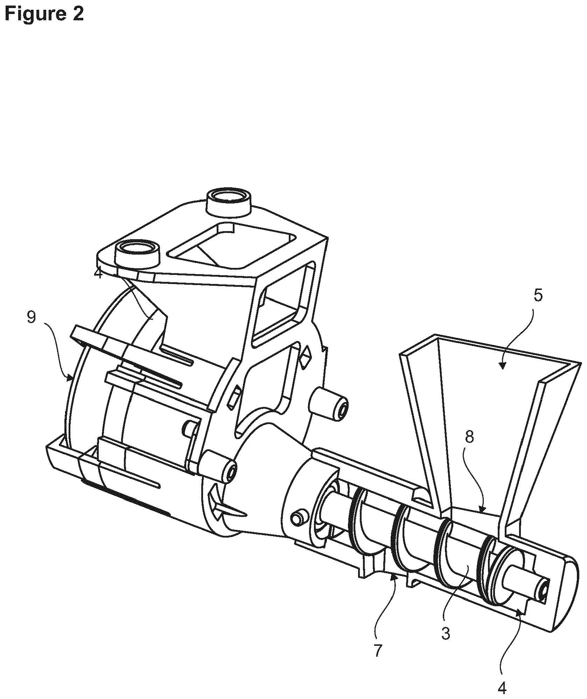

In another embodiment of the present invention, the carrier (3) is inclined from the second orifice (8) to the first orifice (7) from bottom to top. Thus, in cases where the motor (9) is not operational, in other words the carrier (3) stops, sugar from the sugar receptacle () is prevented from directly reaching the brewing pot (2) when the coffee maker (1) vibrates or transported by the user or there are involuntary movements, and is ensured to accumulate at the bottom of the carrier housing (4) wherein the carrier (3) is disposed (Figure 2).

In another embodiment of the present invention, the carrier (3) is manufactured wholly or partially from a soft material. In the preferred embodiment of the present invention, the carrier (3) is manufactured from silicone. Thus, sugar is prevented from getting stuck between the carrier (3) and the carrier housing (4). In an alternative embodiment of this embodiment of the present invention, the coffee maker (1) comprises at least one brush between the carrier (3) and the carrier housing (4). Since sugar does not get stuck, it becomes possible to use a motor (9) with lower torque, which in turn decreases costs.

In an embodiment of the present invention, the coffee maker comprises a lid which covers the first orifice (7) and prevents the sugar passing through the second orifice (8) from directly passing into the brewing pot (2) through the first orifice (7). Thus, sugar is prevented from directly reaching the brewing pot (2) while the sugar receptacle (6) is filled with sugar.

In another embodiment of the present invention, the second orifice (8) is inclined towards the brewing pot (2). Thus, sugar is enabled to be transferred in the desired direction.

In another embodiment of the present invention, the motor (9) is positioned at the front side of the coffee maker (1).

By means of the present invention, the desired amount of sugar is dosed evenly, and the process of adding sugar is automated while preparing coffee. Moreover, in cases where the motor (9) is not operational, in other words the carrier (3) stops, sugar from the sugar receptacle () is prevented from directly reaching the brewing pot (2) when the coffee maker (1) vibrates or transported by the user or there are involuntary movements, and is ensured to accumulate at the bottom of the carrier housing (4) wherein the carrier (3) is disposed.

## Claims

1. A coffee maker (1) **comprising** at least one brewing pot (2) wherein water, coffee and similar materials are put and which is placed into the brewing chamber; at least one heater which is disposed on the base of the brewing chamber and which heats the brewing pot (2); a control unit which enables the heater to be turned on and off; and a sugar receptacle (6) which receives sugar, **characterized by** a dosing receptacle (5) which is disposed under the sugar receptacle (6); a motor (9); a carrier (3) which is in the form of a spiral shaft with one end attached to the motor (9) and which is positioned in the dosing receptacle (5) in an inclined manner; and a carrier housing (4) which receives the carrier (3).

2. A coffee maker (1) as in Claim 1, **characterized by** a first orifice (7) which is arranged at the part of the dosing receptacle (5) aligned with the brewing pot (2).

3. A coffee maker (1) as in Claim 1, **characterized by** a second orifice (8) between the sugar receptacle (6) and the dosing receptacle (5).

4. A coffee maker (1) as in Claim 2, 3, **characterized by** the carrier (3) which is inclined from the second orifice (8) to the first orifice (7) from bottom to top.

5. A coffee maker (1) as in Claim 1, **characterized by** the carrier (3) which is manufactured wholly or partially from a soft material.

6. A coffee maker (1) as in Claim 5, **characterized by** the carrier (3) which is manufactured from silicone.

7. A coffee maker (1) as in Claim 1, **characterized by** at least one brush between the carrier (3) and the carrier housing (4).

8. A coffee maker (1) as in any one of the above claims, **characterized by** a lid which covers the first orifice (7) and prevents the sugar passing through the second orifice (8) from directly passing into the brewing pot (2) through the first orifice (7).
